(19) Europäisches Patentamt
European Patent Office
Office européen des brevets

(11) EP 0 739 856 A2

(12) **EUROPEAN PATENT APPLICATION**

(43) Date of publication:
**30.10.1996 Bulletin 1996/44**

(51) Int. Cl.[6]: **C01B 37/02**, B01J 20/10

(21) Application number: **96250091.4**

(22) Date of filing: **24.04.1996**

(84) Designated Contracting States:
**DE FR GB**

(30) Priority: **25.04.1995 JP 101329/95**
**15.11.1995 JP 297141/95**

(71) Applicant: **THE INSTITUTE OF PHYSICAL & CHEMICAL RESEARCH**
**Wako-shi Saitama 351-01 (JP)**

(72) Inventors:
- **Ogawa, Makoto**
  **Tokyo 162 (JP)**
- **Sasabe, Hiroyuki**
  **Wako-shi, Saitama 351-01 (JP)**

(74) Representative: **Ziebig, Marlene, Dr. Dipl.-Chem. et al**
**Patentanwälte**
**Gulde Hengelhaupt Ziebig**
**Lützowplatz 11-13**
**10785 Berlin (DE)**

# (54) A silica-surfactant nanocomposite and its production process

(57) A periodic silica-surfactant nanocomposite, of which crystal structure belongs to hexagonal system, has aggregated cylindrical micelle rods formed by surfactant surrounded by silica layers is provided. A periodic silica porous material has channels sized in 1-2 nm, with equal to or more than 1,000 $m^2/g$ as BET surface area is also provided by calcining the nanocomposite. A production process of the nanocomposites is further provided, and the process comprising steps of hydrolyzing tetraalkoxysilane under acidic condition to obtain hydrolysates, mixing surfactants and the hydrolysates obtained, coating the mixed solution on the substrate, and drying the coated solution.

Such nanocomposites are obtained conveniently, and they may be formed as transparent film or gel-like lumps. Since the silica porous material has high specific surface area, it is available for optical functional materials, and so forth.

EP 0 739 856 A2

## Description

### TECHNICAL FIELD

The present invention relates to a silica-surfactant nanocomposite available for a material such as an optical functional material, electronic functional material, catalysis carrier, and adsorbent, its production process, and a silica porous material available for catalysis carrier, sensor, adsorption medium, and a host for inclusion compound and so forth.

### BACKGROUND OF THE INVENTION

Recent several years, the study of controlling the structure of inorganic materials by using organic compounds has been paid much attention, since it is available for obtaining a material having novel configuration or structure. Particularly, the preparation of inorganic ultra-fine particles or porous materials by using surfactants is attracting people's attention in both basic and application field.

Nanocomposites is a composite material in which molecules or clusters with nm sizes are organized by medium. Such composites are quite hopeful as the optical functional materials or electron functional materials, because they may be employed to construct precisely designed material as found in biological system and so forth, or may be expected to form materials expressing novel characteristics caused by quantum size effects and so forth. Nanocomposites having improved mechanical strength or thermal properties are also included. When a periodic silica-surfactant nanocomposites are obtained as a transparent film, the film may be applied on the optical functional materials or electron functional materials. Therefore, it is desirable to develop the composite material having such functions. Furthermore, if transparent, silica porous material having high specific surface area and uniformly-sized channel(not smaller than 1 nm) is obtained, it may be employed as a catalysis carrier, sensor, adsorption medium, or host for inclusion compound. Therefore, it is desirable to develop such silica porous material.

As production processes for silica-surfactant nanocomposite, the following two processes are known as examples: the process by means of ion exchange between kanemite, a phyllosilicate, and a surfactant(Yanagisawa, T., Shimizu, T., Kuroda, K., and Kato, C., Bull. Chem. Soc. Jpn., 63:988-992(1990), and Inagaki, S., Fukushima, Y. and Kuroda, K., J. Chem. Soc. Chem. Commun., 680-682(1993)), or the process by means of hydrothermal synthesis in which silica gel and the surfactant are reacted in a sealed pressure vessel(Kresge, C.T., Leonowicz, M. E., Roth, W. J., Vartuli, J. C., and Bech, J. S., Nature, 359:710-712(1992); Beck, J. S. et al., J. Am. Chem. Soc., 114:10834-10843(1992); Monnier, A. et al., Science, 261:1299-1303(1993), Huo, Q. et al., Nature, 368:317-321(1994); Huo, Q. et al., Chem. Mater., 6;1176-1191(1994); Tanev, P. T., Chibwe, M. and Pinnavaia, T. J., Nature, 368:321-323(1994); Tanev, P. T. and Pinnavaia, T. J., Science, 267:865-867(1995)).

However, the above-mentioned methods comprise very complicated operation. Furthermore, the silica-surfactant nanocomposites produced by means of such methods are obtained as fine crystals or fine powders.

### SUMMARY OF THE INVENTION

The purpose of the present invention is to provide periodic silica-surfactant nanocomposites, production process thereof, and silica pours material having high specific surface areas.

The present inventors found that periodic silica-surfactant nanocomposite by adding a surfactant directly into hydrolysates of tetraalkoxysilane to obtain the mixed solution to coat the solution on a base material to dry. Then, they completed the present invention.

The present invention provides a periodic silica-surfactant nanocomposite with crystalline structure belongs to hexagonal system comprising regularly arrayed cylindrical micelle rods formed by a surfactant which are surrounded by silica layers. This nanocomposite is referred to as Nanocomposite 1.

The present invention provides another less-periodic silica-surfactant nanocomposite having a crystalline structure comprising irregularly arrayed cylindrical micelle rods formed by a surfactant which are surrounded by silica layers. The nanocomposite is referred to as Nanocomposite 2.

The present invention further provides a production process of the nanocomposites comprising steps of hydrolyzing tetraalkoxysilane under acidic condition to obtain hydrolysates, mixing surfactants and the hydrolysates obtained, coating the mixed solution on the substrate, and drying the coated solution.

The present invention yet provides a periodic silica porous material, of which channel is sized in 1-2 nm, with equal to or more than 1,000 $m^2/g$ as Brunauer-Emett-Teller(BET) surface area. This material is produced by calcinating Nanocomposites 1.

The present invention yet provides a less-periodic silica porous material, of which channel is sized in 1-2 nm, with equal to or more than 1,000 $m^2/g$ as Brunauer-Emett-Teller(BET) surface area. This material is produced by calcinating Nanocomposites 2.

As described above, both the silica-surfactant nanocomposites and silica porus materials having periodic crystal structure are prepared conveniently by using the production process of the present invention. Also they may form transparent films or gel-like lumps. Furthermore, by regulating the ratio of the hydrolysate of tetraalkoxysilane to the surfactant contained in the precursor solution, almost all the silicate and the surfactants may be converted into nanocomposites. Such silica-surfactant nanocomposites are available for optical functional materials composed photoactive pigments, or materials for catalyst carrier, modified electrodes, and so forth. Since the silica porous materials of the present invention have large specific surface area, the transparent film made of the material may be employed for catalyst carriers, adsorption media, hosts for inclusion compound, and so forth; in particular, the film is available for the sensor having optical function, and so forth.

## BRIEF DESCRIPTION OF DRAWINGS

Fig. 1 shows the X-ray diffraction pattern of the transparent nanocomposite film prepared in Example 1.

Fig. 2 shows the X-ray diffraction patterns of the transparent nanocomposite film prepared in Example 2, the powdered nanocomposite and its calcined product obtained in Example 3.

Fig. 3 shows the nitrogen adsorption-desorption isotherms (77K) for the calcined products obtained in Example 3.

Fig. 4 shows the $^{29}Si$ solid NMR spectrum of the transparent nanocomposite obtained in Example 3.

Fig. 5 shows the X-ray diffraction patterns of the transparent nanocomposite film prepared in Example 4.

## DETAILED DESCRIPTION OF THE INVENTION

The present invention is described hereinbelow in detail.

In order to produce either Nanocomposite 1 or Nanocomposite 2, tetraalkoxysilane is hydrolyzed at first. The hydrolysis is performed at the range of pH 1 to 4, because controlling both hydrolysis and condensation rates of tetraalkoxysilane make a viscous solution mixed of the hydrolysates and the surfactants prepare.

As pH adjustors, any pH adjustors except hydrofluoric acid may be employed in hydrolysis. Diluted hydrochloric acid, hydrobromic acid, or sulfuric acid are given as examples.

As tetraalkoxysilane, tetramethoxysilane, tetraethoxysilane, or tetraisopropoxysilane are given as concrete examples, and tetramethoxysilane is preferable. Tetraalkoxysilane may be employed together with alkyltrialkoxysilane such as methyltrimethoxysilane. Tetraalkoxysilane is employed as alone or combination of at least two of them.

Amount of water added is preferably 0.5 to 20 moles per 1 mole of tetraalkoxysilane, more preferable, 0.5 to 10 moles per it. When too much water is added, there is a disadvantage that gelation caused by too advanced hydrolysis and/or condensation occurs. In contrast, when too less water is added, there is another disadvantage that the surfactant subsequently added is not dissolved.

In general, this hydrolysis is performed for several minutes to about three hours at room temperature. The mixture of tetraalkoxysilane and water is emulsion just after they are mixed, that is, at the early stage of hydrolysis. However, it becomes homogenized solution when hydrolysis is progressed.

The most specific feature of the present invention is direct addition of the surfactant into the hydrolysate of tetraalkoxysilane. The surfactant is added into the hydrolysate, controlling pH of the mixture suitably and stirring vigorously. Then, transparent, homogenize, and viscous solution is obtained. However, the reaction should be performed carefully, since the long time reaction after addition of the surfactant in sealed vessel causes gelation of the mixture and the composite obtained as the product becomes amorphous.

As the surfactant, compounds having a long-chain alkyl group and a hydrophilic group are generally used. As the long-chain alkyl groups, the groups having 8 to 18 carbons are preferable. As the hydrophilic groups, for instance, the groups shown in the following chemical structure are given:

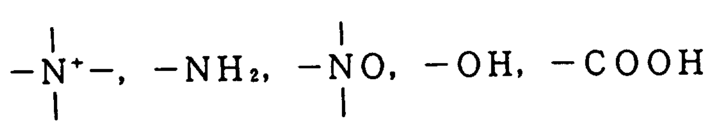

As the surfactant, alkylammonium salts such as cetyltrimethylammonium bromide, alkylalcohols such as cetylalcohol, or fatty acids such as palmitic acid are given, and alkylammonium salts shown in the following chemical structure are preferable:

$$C_nH_{2n+1}N(CH_3)_3X \quad (1)$$

wherein, n represents an integer of 8 to 18, X is a halide ion such as chloride ion and bromide ion, organic anion such as acetic acid ion or $HSO_4^-$.

When the charging ratio of the surfactant:tetraalkoxysilane is changed, the thickness of the silica layer on the nanocomposite or thermal stability of the nanocomposite may be regulated.

The molar ratio of the surfactant and tetraalkoxysilane is preferably 1:10 to 1:1, more preferably 1:6 to 1:3. When too much surfactant is used, there is a disadvantage that excess crystal surfactant which does not contribute to form the composite remains in the sample. In contrast, when too less surfactant is added, excess silicate which does not contribute to form the composite remains in the sample, and the composite has lower regularity in its structure caused by too thick silica layer.

A film or gel-like lump of the silica-surfactant nanocomposite is produced by coating the above-mentioned solution on the substrate to dry to form a film on it. Nanocomposite 1 is produced by coating the solution on the substrate to dry at a temperature between 0 to 120°C for about 10 to 60 minutes to form a film with the thickness about 0.5 to 10 µm. Nanocomposite 2 is produced by coating the solution on the substrate to dry at a temperature between 25 to 120°C for about 1 to 150 hours to form a film with the thickness about 1 to 100 µm. Both films formed on the substrates are transparent, and they may be used as composites per se or as powders after peeling off. Furthermore, since the film made of Nanocomposite 2 has a self-standing property, this film may be used as film peeled off from the substrate per se.

As the substrate for the nanocomposite film formation, any substrate used generally may be employed. For example, glass, quartz, or acrylic plate is given. These substrates may be in any figures such as planer or not planer plate. As methods for coating the solution on the substrate and drying the solution on it, spin coat, casting or dip coat and so forth are given. In spin coat, the substrate is placed on a spinner, and the coating solution is dropped onto the substrate which is rotated at 500 to 5,000 rpm, preferably 2,000 to 5,000 rpm to prepare uniform thickness film. The thickness of the spin coat film obtained may be regulated from 1 to 50 µm. The cast film obtained by means of casting method may be thicker. For example, the cast film having the thickness of 1 to 100 µm may be obtained when the solution is casted into the petri dish and dried.

Nanocomposite 1 is subjected to both the $^{29}Si$ solid NMR and IR. The results showed that tetraalkoxysilane forms siloxane network by condensation after it is hydrolyzed. Furthermore, it is confirmed that Nanocomposite 1 has periodic crystal structure which comprises the regularly arrayed cylindrical micelle rods formed by the surfactant with the diameter of 2 to 4 nm and the rods are surrounded by silica layers with the thickness of 1 to 2 nm. In addition, it is also confirmed that the crystal structure of Nanocomposite 1 belongs to hexagonal system. Molar ratio of silica atom: the surfactant molecule is 4:1, and the almost all the silicate and the surfactant molecule is converted into the nanocomposite when silicate and the surfactant are contained at the suitable ratio in the precursor solution. When the hydrolysate of tetraalkoxysilane and surfactant are mixed and reacted in the sealed vessel for long time until gelation occurs, the composite obtained is amorphous. Therefore, it is considered that the periodic crystal structure is formed by the evaporation of volatile components (alkylalcohol generated from the decomposition of tetraalkoxysilane) from the precursor solution, although the state of surfactant in the starting solution was not clear at present. On the other hand, it is confirmed that Nanocomposite 2 has less-periodic crystal structure which comprises the irregularly arrayed cylindrical rods formed by the surfactant surfactant with the diameter of 2 to 4 nm, and the rods are surrounded by silica layers from its X-ray diffraction analysis.

The silica porous material having the periodic crystal structure, which is referred to as silica porus material 1, is produced by calcinating Nanocomposite 1 to remove the surfactant. The silica porus material having the less-periodic crystal structure, which is referred to as silica porus material 2, is produced by calcinating Nanocomposite 2 to remove the surfactant. In both cases, calcinating temperature is 550 to 700°C. When the silica-surfactant nanocomposite film is calcinated per se, the silica porus material is prepared as the form of film. When powdered silica-surfactant nanocomposite is calcinated, the silica porus material is prepared as the form of powder. Both silica porous materials 1 and 2 have high specific surface area not less than 1,000 $m^2/g$ of Brunauer-Emmett-Teller (BET) surface area, and the average channel size with 1 to 2 nm, and their diameter size distribution is narrow.

## EXAMPLES

(Example 1)

One g of tetramethoxysilane (abbreviated as TMOS) is hydrolyzed by substoichiometric amount, 236 mg of deionized water(the molar ratio of TMOS:$H_2O$ is 1:2) in pH 1 to 4 for 1 hr at room temperature. pH is adjusted by using diluted HCl. Initially, namely, just after deionized water is added, the mixture is an emulsion but it became clear and homogeneous within few minutes. Hexadecyltrimethylammonium chloride($C_{16}H_{33}N(CH_3)_3Cl$, abbreviated as C16TAC), 526 mg as the surfactant is directly dissolved into the hydrolysate(the molar ratio of TMOS:C16TAC is 4:1). The mixture is vigorously stirred for several minutes, keeping pH of the solution at 3 by using diluted HCl. Then, the clear and homogeneous solution is obtained.

Then, the solution obtained is spin coated on a glass substrate and dried in air at room temperature. Thus, transparent films with the thickness of ca. 4 μm are prepared.

The film prepared is analyzed by using X-ray diffraction analysis. The X-ray diffraction pattern is shown in Fig. 1. The pattern showed a very sharp diffraction peak with the *d* value of 3.7 nm and weaker reflections in the 2θ range from 4.0 to 7.0°. These peaks can be indexed on a hexagonal order, in which the peaks with the d values of 3.7, 2.2, 1.9, 1.4 and 1.3 nm are attributed to (100), (110), (200), (210), and (300) reflections respectively. This X-ray diffraction pattern indicates that a hexagonal silica-surfactant nanocomposite formed on the substrate as a transparent film.

(Example 2)

In this Example, the film is prepared as the same method as employed in Example 1 except using dodecyltrimethylammonium chloride($C_{12}H_{25}N(CH_3)_3Cl$, abbreviated as C12TAC), tetradecyltrimethylammonium chloride($C_{14}H_{29}N(CH_3)_3Cl$, abbreviated as C14TAC), or hexadecyltrimethylammonium bromide($C_{16}H_{33}N(CH_3)_3Br$, abbreviated as C16TAB) instead of C16TAC. Transparent composite films such as the silica-C12TAC, silica-C14TAC, and silica-C16TAB are prepared.

Both the silica-C12TAC and silica-C14TAC nanocomposite films prepared are analyzed with X-ray diffraction analysis. The X-ray diffraction patterns of both films are shown in Figs. 2(a) and (b). The films showed X-ray reflection attributable to the hexagonal phase. The $d_{100}$ values (3.2 and 3.6 nm for the C12TAC and C14TAC composites, respectively) changed depending on the chain length of the alkyl group contained in the surfactant used. These data support that surfactant aggregates played an important role in the formation of the nanocomposite structure. When hexagonal nanostructure composite film prepared by using C16TAB is subjected to the X-ray analysis, its $d_{100}$ value (3.9 nm) is slightly larger than that of the silica-C16TAC composite film. This result suggests that the halide anions locate at the interfaces of silica and the hydrophilic head group of the surfactants.

(Example 3)

Gel-like sample with the thickness of 5 μm is obtained by casting the precursor solution prepared in the same method as employed in Example 1 on the glass substrate, and drying for about 1 hr at 60°C. The sample generates cracks, and becomes small pieces with the average size of about 3 mm. Then, the gel-like sample is removed from the substrate and crushed into powder. The X-ray diffraction pattern of the powdered silica-C16TAC composite is shown in Fig. 2(c). Also the diffraction pattern can be indexed to the hexagonal phase with the $d_{100}$ value of 3.7 nm. The powdered sample is used for the following characterization and conversion to porous materials.

<u>Characterization</u>

The composition of the gel-like sample is C(38.0 %); N(2.3 %); Cl(5.9 %); ash (41.0 %). The ratio of C:N measured(19.3) corresponded to that of C16TAC (19.0). The ratio of Si:C16TAC (4.1:1.0) is also consistent with the expected one (4.0:1.0), and the ratio of surfactant:Cl is 1.0:1.0.

The gel-like sample is analyzed with infrared spectroscopy. Infrared spectrum of the sample showed the absorption bands which is characteristic to C16TAC (such as C-H stretching vibrations) and silica (such as Si-O-Si symmetric stretching vibration at around 1,230 and 1,080 $cm^{-1}$ and Si-O-Si bending vibration at around 460 $cm^{-1}$). The gel-like sample is also subjected to the $^{29}$Si solid NMR analysis. The NMR spectrum showed one peak attributed to

$Q_3$ : 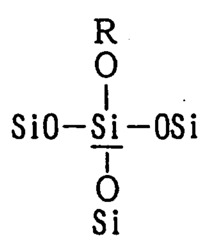

(wherein R denote a hydrogen atom or an alkyl group) at around -100 ppm, and another peak attributed to

$Q_4$ : 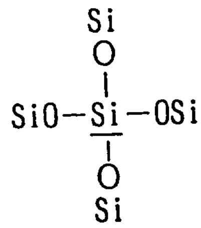

at around -110 ppm(see Fig. 4). The results from both the above-mentioned IR and NMR data analysis demonstrated that siloxane network is formed. Furthermore, since the peaks observed in NMR spectrum are broad, it is also shown that bond angle of siloxane are not even so that the silica backbone has a structure close to that of glass locally.

Thermogravimetric analysis of the gel-like sample showed the weight loss corresponding to the amount of C16TAC when the temperature exceed 200 °C. In differential thermal analysis of the sample, the DTA curve showed an exothermic peak around 300 °C due to oxidative decomposition of C16TAC.

These results from such analysis indicate that the most of TMOS amount is converted into silica, and quantitatively complexed with C16TAC to form the hexagonal silica-surfactant nanocomposite. It should be noted here as an advantage of the present reaction that all the starting components is converted into the product.

Conversion into porus materials

The powdered silica-C16TAC nanocomposite is heated in air at 873 K for 1 hr to remove the surfactant, C16TAC from the composite. The X-ray diffraction pattern of the calcined product is showed in Fig. 2(d). The diffraction intensity does not have any change after calcination, and it is showed that the ordered structure is maintained even after the removal of the surfactant. The $d_{100}$ value of the calcined product(2.9 nm) is ca. 0.8 nm smaller than that of the same product without calcination. Although decrease of the $d_{100}$ value by calcination has been observed for the series of MCM-41 materials, the reason of the shrinkage is not clear at present.

The nitrogen adsorption/desorption isotherms at 77 K of the calcined products are shown in Fig. 3. The calculate product is heated at 393 K for 3 hours before measuring isotherm. The Brunauer-Emmett-Teller (BET) surface area is about 1,000 $m^2$/g. From the Horvath-Kawazoe pore size distribution curve(Horvath, G. and Kawazoe, K. J., J. Chem. Eng. Jpn., 16:470-475(1983)) for the calcined product, the average diameter of pores is determined as ca.1.8 nm. These observations indicate that the periodic silica-surfactant nanocomposites are converted into porous solid. By subtracting the Horvath-Kawazoe channel size from the repeat distance (a) between pore center(3.3 nm, which is calculated from the X-ray diffraction data with the formula $a = 2d_{100}/\sqrt{3}$), the framework wall thickness is estimated as ca. 1.5 nm.

(Example 4)

The precursor solution prepared by using the same method as employed in Example 1 is casted on a Petri dish and dried for about 24 hr at 30 °C. Thus, a transparent self-standing film with the thickness of c.a. 30 μm is obtained. The X-ray diffraction pattern of the film shows a broad diffraction peak with the *d* value of ca. 4.0 nm(Fig. 5). The X-ray diffraction peak is very broad compared with those of Example 1, and no other reflections are observed in the X-ray diffraction pattern. The broad diffraction peak shown by the sample obtained in this Example suggests that the composite obtained is composed of irregular array of cylindrical micelles of C16TAC surrounded by silica. It should be noted that the morphology and the transparency of the film are preserved after calcination at 873 K in air are performed. The X-ray diffraction pattern of the calcined sample also showed single diffraction peak with the *d* value of 3.0 nm. The BET surface area of the heated film is 100 $m^2$/g. Thus, a transparent, porous and self-standing film is obtained.

## Claims

**1.** A periodic silica-surfactant nanocomposite with a crystalline structure belongs to hexagonal system comprising regularly arrayed cylindrical micelle rods formed by a surfactant surrounded by a silica layer.

**2.** A less-periodic silica-surfactant nanocomposite with a crystalline structure comprising irregularly arrayed cylindrical micelle rods formed by a surfactant surrounded by a silica layer.

**3.** A production process for a silica-surfactant nanocomposite comprising the steps of:

hydrolyzing tetraalcoxysilane under in acidic condition,
coating the mixed solution of resulting hydrolysates and surfactants to a surface of a substrate; and drying said solution on the substrate.

4. A production process of claim 3, wherein said tetra alcoxysilane is tetramethoxysilane.

5. A production process of claim 3 or 4, wherein said surfactant is a compound comprising a long-chain alkyl group and a hydrophilic group.

6. A production process of claim 3 or 4, wherein said surfactant is a compound shown in the following chemical structure(1):

$$C_nH_{2n+1}N(CH_3)_3X \qquad (1)$$

wherein, n represents an integer from 8 to 18, X denotes an ion selected from the group consisting of a halide ion, $HSO_4^-$, and organic anion.

7. A periodic silica porous material obtained by means of calcinating the silica-surfactant nanocomposite of claim 1, the material which having a average diameter of channel with 1 to 2 nm, and Brunauer-Emett-Teller(BET) surface area equal to or more than 1,000$m^2$/g.

8. A less-periodic silica porous material obtained by means of calcinating the silica-surfactant nanocomposite of claim 2, the material which having a average diameter of channel with 1 to 2 nm, and Brunauer-Emett-Teller(BET) surface area equal to or more than 1,000$m^2$/g.

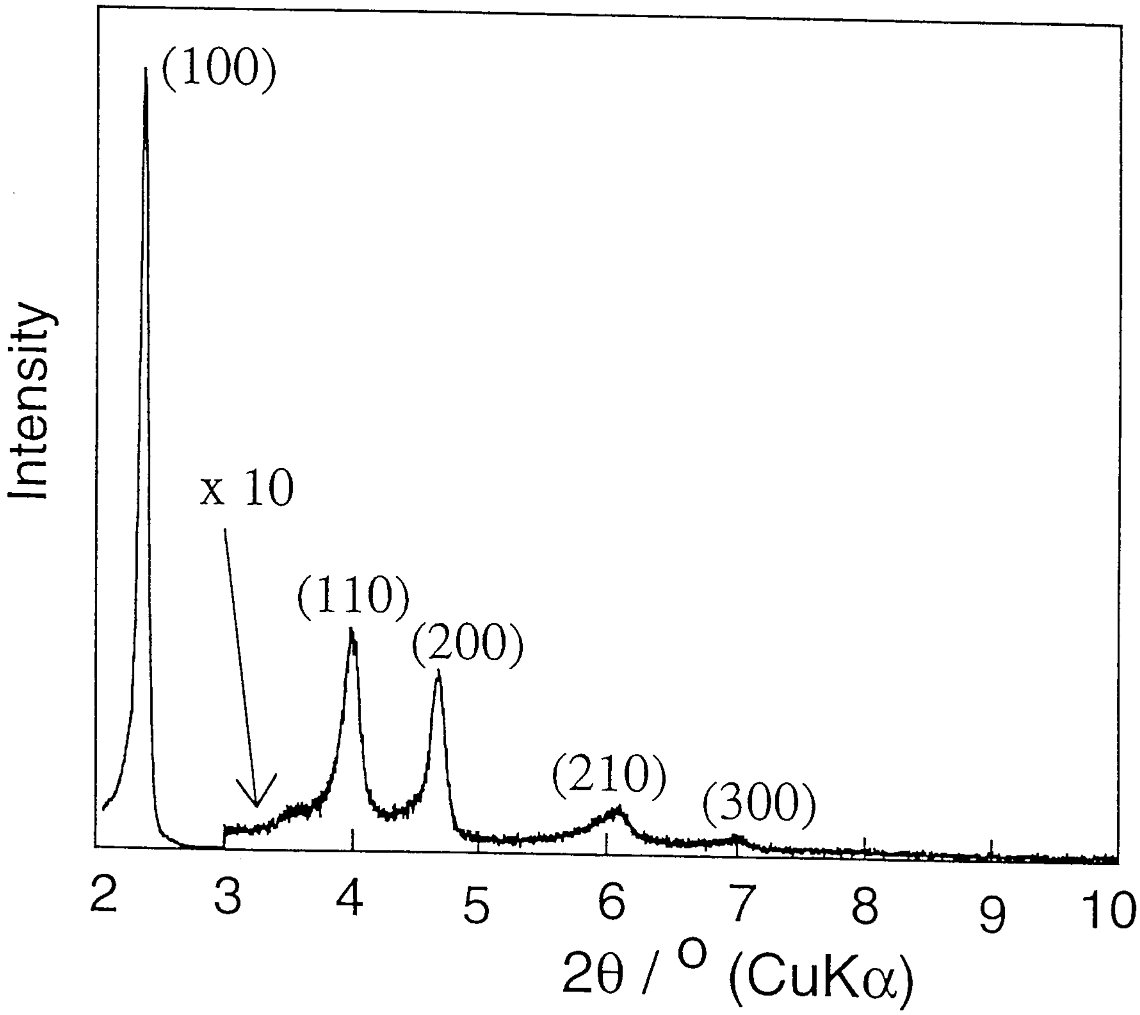


Figure 1. X-ray diffraction pattern of the silica-C16TAC composite film.

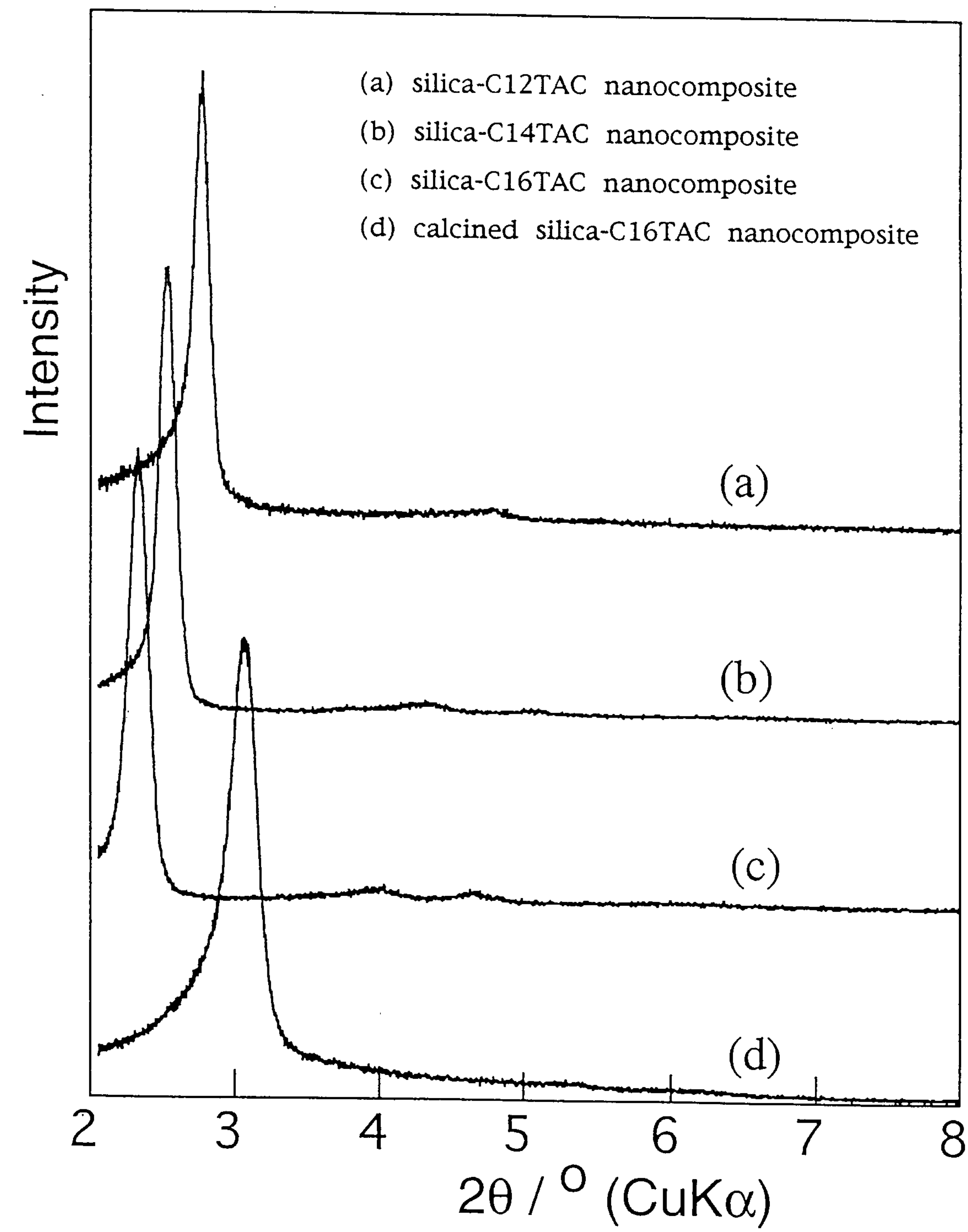


Figure 2. X-ray diffraction patterns

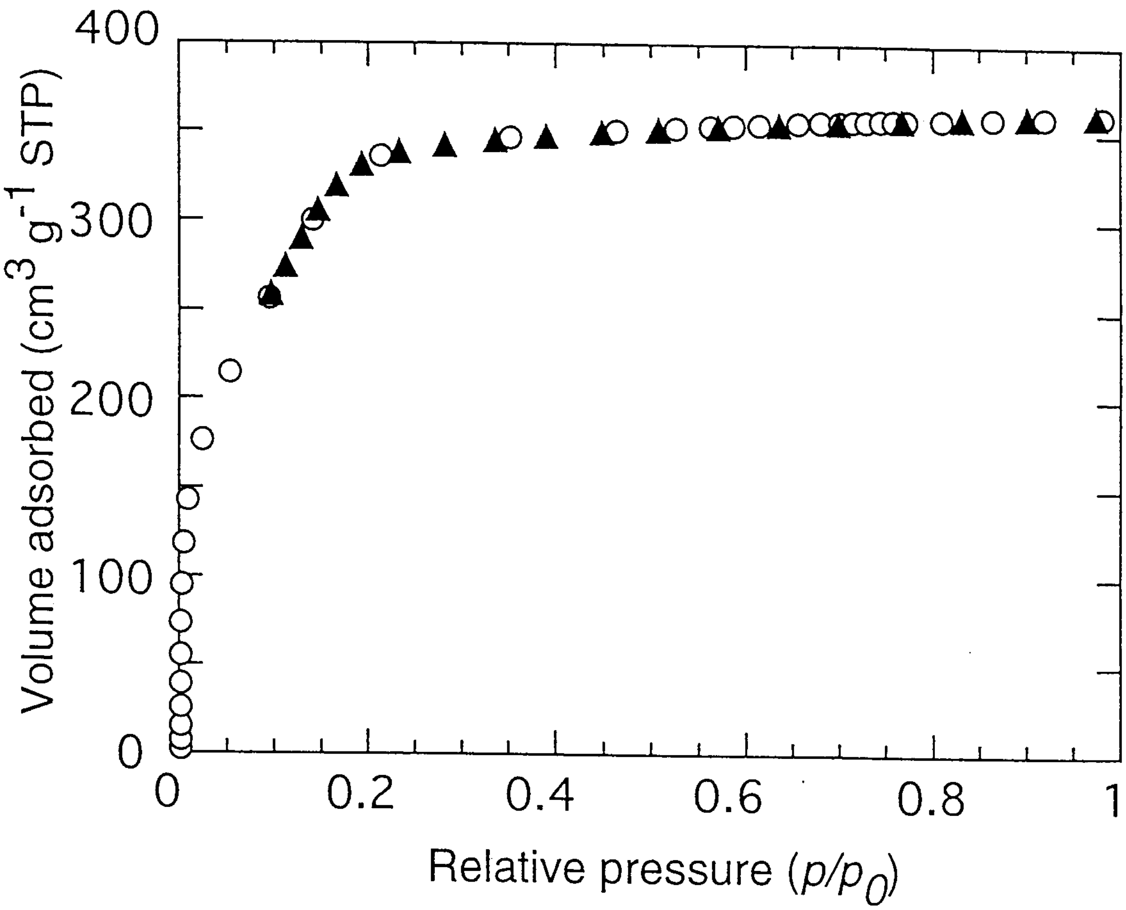


Figure 3. Nitorgen adsorption-desorption isotherms for the calcined silica-C16TAC composite. (77K)

Figure 4. $^{29}$Si solid NMR spertrum of silica-C16TAC nanocomposite

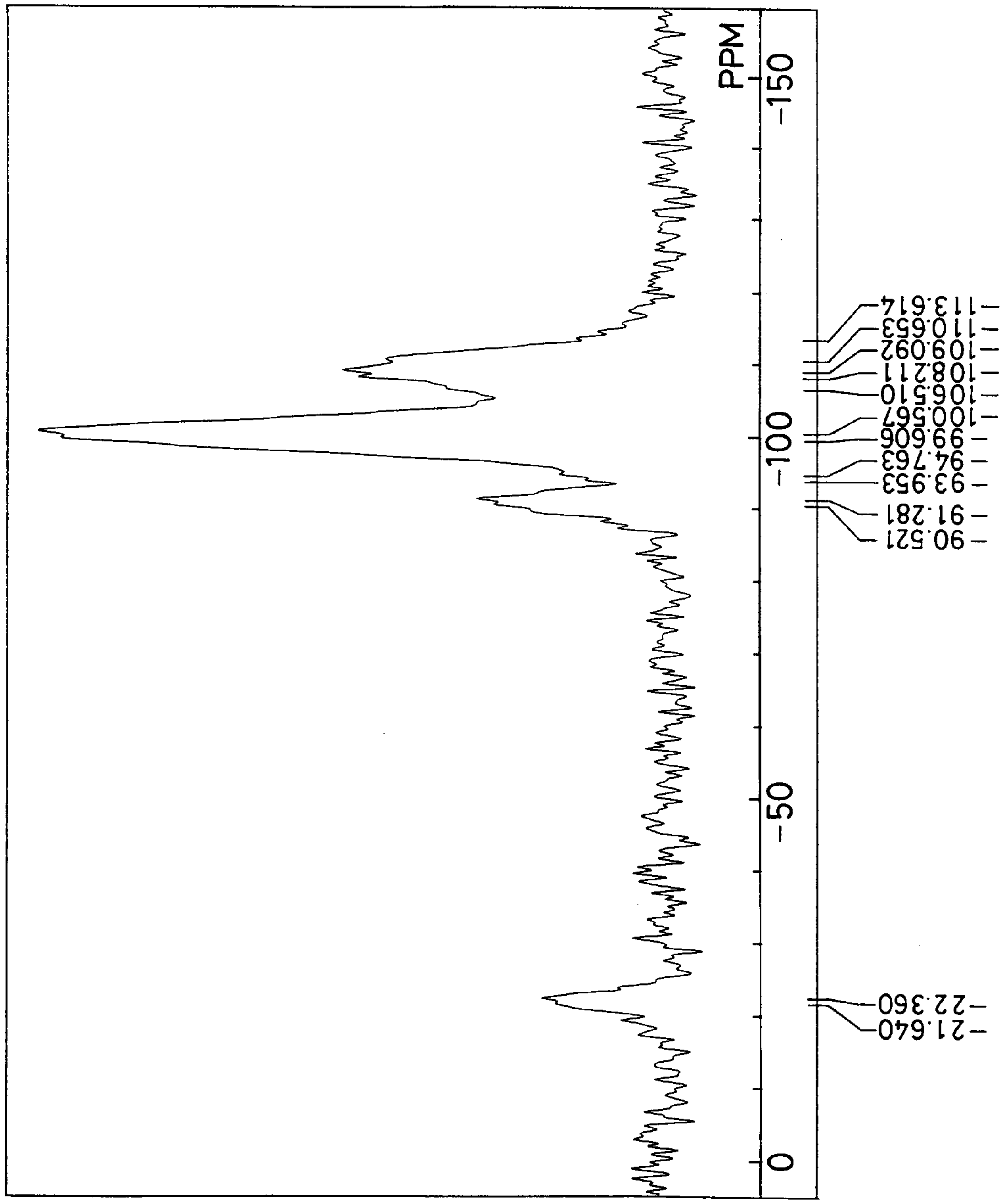

Figure 5.

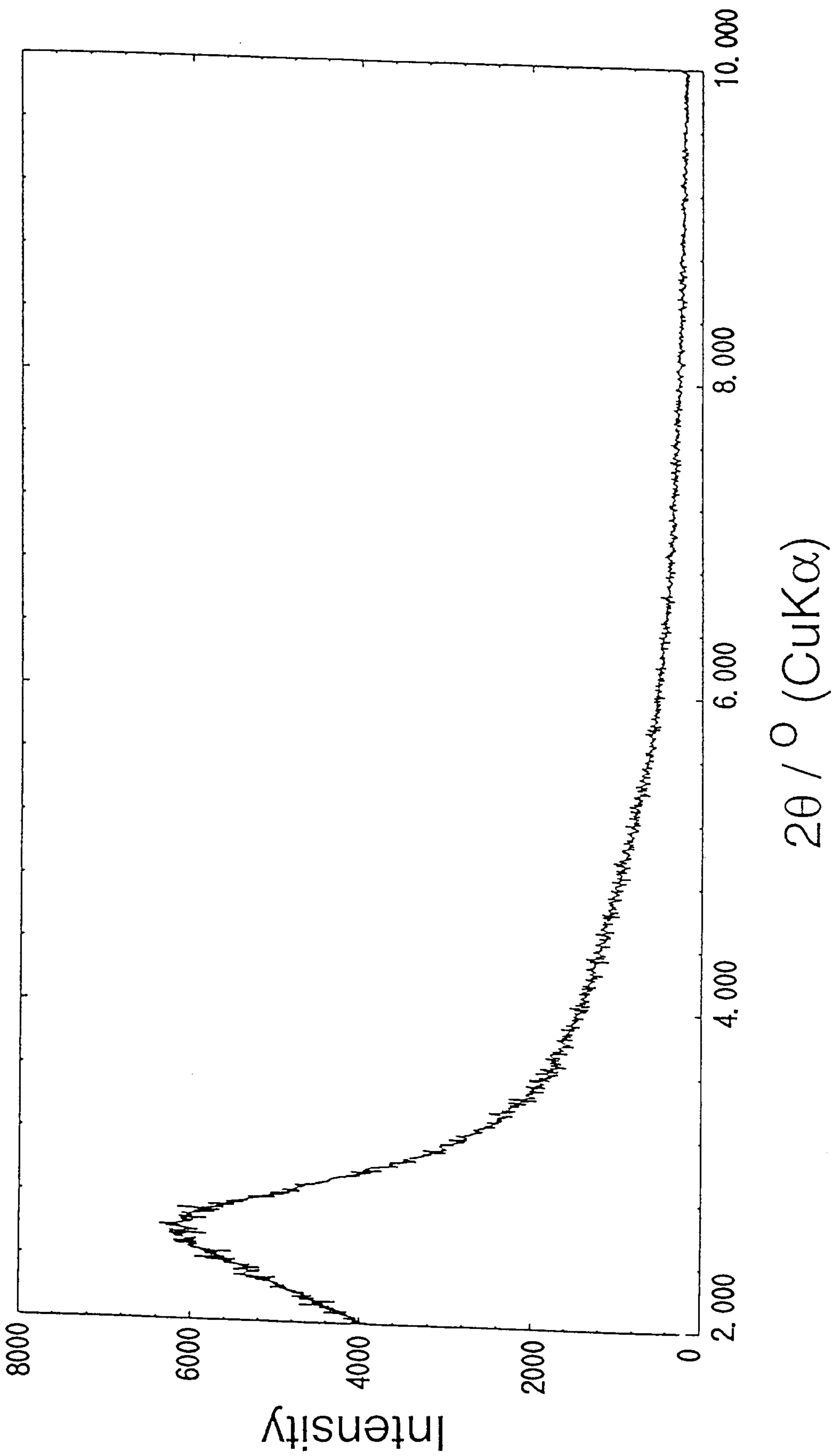
Intensity
8000
6000
4000
2000
0
2.000
4.000
6.000
8.000
10.000
2θ / ° (CuKα)